(19) Europäisches Patentamt / European Patent Office / Office européen des brevets

(11) **EP 4 635 813 A1**

(12) **EUROPEAN PATENT APPLICATION**
published in accordance with Art. 153(4) EPC

(43) Date of publication:
**22.10.2025 Bulletin 2025/43**

(21) Application number: **24915838.7**

(22) Date of filing: **05.02.2024**

(51) International Patent Classification (IPC):
**B60W 20/20** (2016.01)     **B60W 40/076** (2012.01)
**B60W 40/10** (2012.01)

(86) International application number:
**PCT/CN2024/076101**

(87) International publication number:
**WO 2025/161050 (07.08.2025 Gazette 2025/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.01.2024 CN 202410145271**

(71) Applicant: **Chongqing Changan Automobile Co., Ltd.**
**Chongqing 400023 (CN)**

(72) Inventors:
• **YUAN, Ye**
  **Chongqing 400023 (CN)**
• **HU, Xianli**
  **Chongqing 400023 (CN)**
• **TANG, Chaoyang**
  **Chongqing 400023 (CN)**

(74) Representative: **Keller Schneider**
**Patent- und Markenanwälte AG**
**Eigerstrasse 2**
**Postfach**
**3000 Bern 14 (CH)**

(54) **HYBRID POWER MODE CONTROL METHOD, POWER CONTROLLER, CONTROL SYSTEM, AND VEHICLE**

(57) The present application relates to the technical field of hybrid vehicles, and discloses a control method for a hybrid mode, a power control unit, a control system, and a vehicle. According to the present application, when it is detected that an environmental condition reaches a critical condition for switching between series and parallel modes in a vehicle driving process, whether a slope parameter is greater than a preset slope is judged. If yes, whether an acceleration parameter is greater than a first threshold value, or, whether a pedal opening degree change parameter is greater than a second threshold value continues to be detected. If a result of any of two judgments is yes, the vehicle is not immediately switched to the series mode. Instead, the vehicle is controlled to maintain the parallel mode for a set duration to continue driving, circumventing a problem of an increase in rotational speed during switching from the parallel to the series, thus avoiding generating a noise when an engine runs. The method improves experience of a user.

Obtain, when it is detected that an environmental condition reaches a critical condition for switching between series and parallel modes in a vehicle driving process, a slope parameter of a road condition and an acceleration parameter or a pedal opening degree change parameter of a vehicle, wherein a driving mode of the vehicle is the parallel mode in the driving process — S101

↓

Judge whether the slope parameter is greater than a preset slope — S102

↓ Yes

Detect whether the acceleration parameter is greater than a first threshold value, or, whether the pedal opening degree change parameter is greater than a second threshold value — S103

↓ Yes

Control the vehicle to maintain driving in the parallel mode for a set duration — S104

FIG. 4

## Description

### TECHNICAL FIELD

The present application relates to the field of hybrid vehicles, in particular to a control method for a hybrid mode, a power control unit, a control system, and a vehicle.

### BACKGROUND

A hybrid system of a hybrid vehicle includes a pure electric mode, a series mode, and a parallel mode, wherein the pure electric mode means that a power battery provides electrical energy to a motor, and then the motor drives the vehicle; the series mode means that an engine drives a generator to generate electricity, the generator provides electrical energy to the motor, and then the motor drives the vehicle; and the parallel mode means that the engine and the motor drive the vehicle together.

In order to give full play to advantages of the engine and the motor in the series mode and the parallel mode, an existing hybrid system can achieve adaptive switching of a hybrid mode when a vehicle speed and an accelerator pedal meet certain conditions. However, when the vehicle is switched from the parallel mode to the series mode, since a rotational speed of the engine in the series mode is not constrained by a mechanical structure of a wheel, the rotational speed is higher compared to that of the parallel mode, which generates an obvious noise. In this case, a background noise of vehicle traveling cannot cover the sound generated by the engine during operation, which greatly affects a driving mood and experience of a user.

### SUMMARY OF THE INVENTION

In view of this, the present application provides a control method for a hybrid mode, a power control unit, a control system, and a vehicle to solve a problem that in a conventional control method, an obvious noise is prone to being generated during switching a vehicle from a parallel mode to a series mode, which results in a decline in experience of a user.

In a first aspect, the present application provides a control method for a hybrid mode, including:

obtaining, when it is detected that an environmental condition reaches a critical condition for switching between series and parallel modes in a vehicle driving process, a slope parameter of a road condition and an acceleration parameter or a pedal opening degree change parameter of a vehicle, wherein a driving mode of the vehicle is the parallel mode in the driving process;

judging whether the slope parameter is greater than a preset slope;

detecting, if yes, whether the acceleration parameter is greater than a first threshold value, or, whether the pedal opening degree change parameter is greater than a second threshold value; and

controlling, if a result of any of two judgments is yes, the vehicle to maintain driving in the parallel mode for a set duration.

Thus, when it is detected that the environmental condition reaches the critical condition for switching between the series and parallel modes in the vehicle driving process, whether the slope parameter is greater than the preset slope is judged. If yes, whether the acceleration parameter is greater than the first threshold value, or, whether the pedal opening degree change parameter is greater than the second threshold value continues to be detected. If the result of any of the two judgments is yes, the vehicle is not immediately switched to the series mode. Instead, the vehicle is controlled to maintain the parallel mode for the set duration to continue driving, circumventing a problem of an increase in rotational speed during switching from the parallel to the series, thus avoiding generating a noise when an engine runs, preventing bad experience for a user.

In an optional implementation, the method further includes:

detecting, when the slope parameter is less than the preset slope, whether the acceleration parameter is greater than the first threshold value, or, whether the pedal opening degree change parameter is greater than the second threshold value; and

controlling, if a result of any of two judgments is yes, the vehicle to maintain driving in the parallel mode for a set duration.

Thus, when the slope parameter is less than the preset slope, whether the acceleration parameter is greater than the first threshold value, or, whether the pedal opening degree change parameter is greater than the second threshold value is detected, so that whether the vehicle triggers series and parallel switching is judged from a plurality of dimensions. If the result of any of the two judgments is yes, the vehicle is first controlled to maintain the parallel mode for the set duration to continue driving, and then switched to the series mode, which may circumvent a problem of an increase in rotational speed during switching from the parallel to the series, thus avoiding generating a noise when the engine runs, preventing bad experience for the user.

In an optional implementation, the environmental condition includes an altitude of an environment where the vehicle is located.

Detecting that the environmental condition reaches the critical condition for switching between the series and parallel modes includes:

detecting that an altitude of the vehicle exceeds an altitude threshold value.

Thus, whether the environmental condition reaches the critical condition for switching between the series and parallel modes is detected by judging whether the altitude of the vehicle exceeds the altitude threshold value.

In an optional implementation, the environmental condition includes a first temperature of the environment where the vehicle is located.

Detecting that the environmental condition reaches the critical condition for switching between the series and parallel modes includes:

detecting that the first temperature of the environment where the vehicle is located exceeds a first preset temperature interval.

Thus, whether the environmental condition reaches the critical condition for switching between the series and parallel modes is detected by judging whether the first temperature of the environment where the vehicle is located exceeds the first preset temperature interval.

In an optional implementation, the environmental condition includes a battery charge parameter SOC on the vehicle. Detecting that the environmental condition reaches the critical condition for switching between the series and parallel modes includes:

detecting that a battery SOC percentage is lower than a power threshold value.

Thus, whether the environmental condition reaches the critical condition for switching between the series and parallel modes is detected by judging whether the battery SOC percentage is lower than the power threshold value.

In an optional implementation, the environmental condition includes a second temperature of a battery on the vehicle. Detecting that the environmental condition reaches the critical condition for switching between the series and parallel modes includes:

detecting that the second temperature of the battery exceeds a second preset temperature interval.

Thus, whether the environmental condition reaches the critical condition for switching between the series and parallel modes is detected by judging whether the second temperature of the battery exceeds the second preset temperature interval.

In an optional implementation, after controlling the vehicle to maintain driving in the parallel mode for the set duration, the method further includes:

switching the driving mode of the vehicle from the parallel mode to the series mode.

Thus, after series and parallel switching is triggered, the vehicle is first controlled to maintain the parallel mode for the set duration to continue driving, and then switched to the series mode, thus avoiding generating a noise when the engine runs.

In an optional implementation, the driving mode of the vehicle is controlled to be the parallel mode in a case where a preset condition is met in the vehicle driving process.

The preset condition includes one or more of the following:

a vehicle speed of the vehicle is greater than a vehicle speed threshold value;
a gear of the vehicle is a drive gear;
the battery SOC percentage on the vehicle is higher than the power threshold value;
the driving mode of the vehicle is a pure electric driving mode;
an overdrive clutch on the vehicle does not fail; or
the engine on the vehicle is in an ignition state, and a fuel level of the vehicle is higher than a fuel level threshold value.

Thus, the driving mode of the vehicle is controlled to be the parallel mode in the case where the preset condition is met, which improves economical efficiency.

In a second aspect, the present application provides a control apparatus for a hybrid mode, including:

an obtaining module, configured to obtain, when it is detected that an environmental condition reaches a critical condition for switching between series and parallel modes in a vehicle driving process, a slope parameter of a road condition and an acceleration parameter or a pedal opening degree change parameter of a vehicle, wherein a driving mode of the vehicle is the parallel mode in the driving process;

a judging module, configured to judge whether the slope parameter is greater than a preset slope;

a detecting module, configured to detect, when a judgment of a second processing module is yes, whether the acceleration parameter is greater than a first threshold value, or, whether the pedal opening degree change parameter is greater than a second threshold value; and

a controlling module, configured to control, when a result of any of two judgments of a third processing module is yes, the vehicle to maintain driving in the parallel mode for a set duration.

In an optional implementation, the judging module is further configured to judge whether the slope parameter is less than the preset slope.

The detecting module is further configured to detect, when a judgment of the judging module is yes, whether the acceleration parameter is greater than the first threshold value, or, whether the pedal opening degree change parameter is greater than the second threshold value.

The controlling module is further configured to control, when the detecting module detects that a result of any of two judgments is yes, the vehicle to maintain driving in the parallel mode for a set duration.

In an optional implementation, the environmental condition includes an altitude of an environment where the vehicle is located. Detecting that the environmental condition reaches the critical condition for switching between the series and parallel modes includes: detecting that an altitude of the vehicle exceeds an altitude threshold value.

In an optional implementation, the environmental condition includes a first temperature of the environment where the vehicle is located. Detecting that the environmental condition reaches the critical condition for switching between the series and parallel modes includes: detecting that the first temperature of the environment where the vehicle is located exceeds a first preset temperature interval.

In an optional implementation, the environmental condition includes a battery charge parameter SOC on the vehicle. Detecting that the environmental condition reaches the critical condition for switching between the series and parallel modes includes: detecting that a battery SOC percentage is lower than a power threshold value.

In an optional implementation, the environmental condition includes a second temperature of a battery on the vehicle. Detecting that the environmental condition reaches the critical condition for switching between the series and parallel modes includes: detecting that the second temperature of the battery exceeds a second preset temperature interval.

In an optional implementation, the controlling module is further configured to switch, after controlling the vehicle to maintain driving in the parallel mode for the set duration, the driving mode of the vehicle from the parallel mode to the series mode.

In an optional implementation, the controlling module is further configured to control the driving mode of the vehicle to be the parallel mode in a case where a preset condition is met in the vehicle driving process.

The preset condition includes one or more of the following:

a vehicle speed of the vehicle is greater than a vehicle speed threshold value;

a gear of the vehicle is a drive gear;

the battery SOC percentage on the vehicle is higher than the power threshold value;

the driving mode of the vehicle is a pure electric driving mode;

an overdrive clutch on the vehicle does not fail; or

an engine on the vehicle is in an ignition state, and a fuel level of the vehicle is higher than a fuel level threshold value.

In a third aspect, the present application provides a power control unit, including a memory and a processor. The memory and the processor are connected. The memory stores computer instructions therein. The processor executes the control method for the hybrid mode of the above first aspect or any corresponding implementation thereof by executing the computer instructions.

In a fourth aspect, the present application provides a computer-readable storage medium, storing computer instructions thereon. The computer instructions are configured to cause a computer to execute the control method for the hybrid mode of the above first aspect or any corresponding implementation thereof.

In a fifth aspect, the present application provides a control system for a hybrid mode, including a power control unit, a power transmission control unit, an overdrive clutch, a battery, a power distribution unit, a motor, a generator, and an engine;

wherein the power control unit is connected to the power transmission control unit, the transmission control unit is connected to the overdrive clutch, the overdrive clutch is connected to the engine and the generator respectively, the generator is connected to the battery via the power distribution unit, and the battery is connected to the motor.

The power control unit is configured to perform the control method for the hybrid mode of the above first aspect or any corresponding implementation thereof.

In a sixth aspect, the present application provides a vehicle, including the control system for the hybrid mode of the above fifth aspect.

The present application has the beneficial effects:

when it is detected that the environmental condition reaches the critical condition for switching between the series and parallel modes in the vehicle driving process, whether the slope parameter is greater than the preset slope is judged. If yes, whether the acceleration parameter is greater than the first threshold value, or, whether the pedal opening degree change parameter is greater than the second threshold value continues to be detected. If the result of any of the two judgments is yes, the vehicle is not immediately switched to the series mode. Instead, the vehicle is controlled to maintain the parallel mode for the set duration to continue driving, circumventing the problem of an increase in rotational speed during switching from the parallel to the series, thus avoiding generating a noise when the engine runs, preventing bad experience for the user.

## BRIEF DESCRIPTION OF THE DRAWINGS

In order to more clearly illustrate technical solutions in specific implementations of the present application or the prior art, accompanying drawings that need to be used in the description of the specific implementations or the prior art will be briefly introduced below. It is obvious that the accompanying drawings in the following description show some implementations of the present application, and for those of ordinary skill in the art, other accompanying drawings may further be obtained according to these accompanying drawings without creative work.

FIG. 1 is a schematic structural diagram of a control system for a hybrid mode provided by an embodiment of the present application.

FIG. 2A is a schematic structural diagram of a series mode provided by an embodiment of the present application.

FIG. 2B is a diagram of a data stream of requesting switching to a series mode provided by an embodiment of the present application.

FIG. 3A is a schematic structural diagram of a parallel mode provided by an embodiment of the present application.

FIG. 3B is a diagram of a data stream of requesting switching to a parallel mode provided by an embodiment of the present application.

FIG. 4 is a schematic flowchart of a control method for a hybrid mode provided by an embodiment of the present application.

FIG. 5 is a schematic flowchart for judging whether there is an economical efficiency parallel request provided by an embodiment of the present application.

FIG. 6 is a schematic flowchart of another control method for a hybrid mode provided by an embodiment of the present application.

FIG. 7 is a schematic flowchart of yet another control method for a hybrid mode provided by an embodiment of the present application.

FIG. 8 is a structural block diagram of a control apparatus for a hybrid mode provided by an embodiment of the present application.

FIG. 9 is a schematic diagram of a hardware structure of a power control unit of an embodiment of the present application.

FIG. 10 is a schematic structural diagram of a vehicle of an embodiment of the present disclosure.

## DETAILED DESCRIPTION

In order to make an objective, a technical solution and advantages of embodiments of the present application clearer, the technical solution in the embodiments of the present application will be clearly and completely described below in combination with accompanying drawings in the embodiments of the present application. Apparently, the described embodiments are part of the embodiments of the present application, not all of them. Based on the embodiments in the present application, all other embodiments obtained by those of skill in the art without making creative work belong to the scope of protection of the present application.

A configuration of a plug-in hybrid electric vehicle (PHEV) is mostly in a form of hybrid connection, i.e., it contains two operating states: series connection and parallel connection. In the parallel connection, an engine is coupled to a wheel end, the engine is mechanically connected to a wheel, and a rotational speed is limited by a vehicle speed. In the series connection, the engine is decoupled from the wheel end, and the engine may independently select a rotational speed running point.

A pure electric driving mode of the PHEV is now a major concern for many users. Especially some PHEVs with low endurance mileages are not strong in pure electricity in a state of lack of power. The problem mainly comes from a fact that in order to ensure that power does not continue to decrease in a balanced power state, a power structure is switched from parallel direct-drive to a series state, a rotational speed of an engine in the series state is not constrained by a mechanical structure of wheels, and thus the rotational speed is generally higher compared to that of parallel connection, which makes a noise, resulting in a decline in experience of a user.

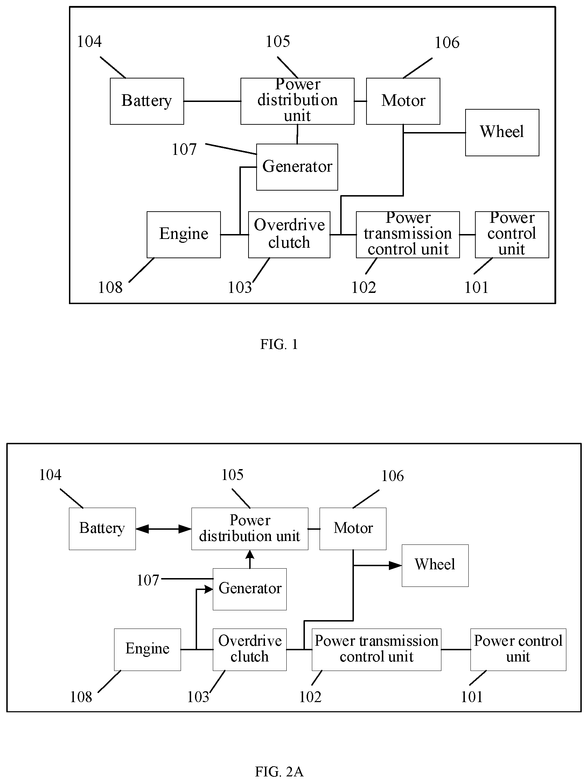

According to an embodiment of the present application, a control system for a hybrid mode is provided. As shown in FIG. 1, the control system includes a power control unit (PTU) 101, a power transmission control unit (PTCU) 102, an OD clutch (ODC) 103, a battery (BATT) 104, a power distribution unit (PDU) 105, a motor (MOT) 106, a generator (GEN) 107, and an engine (ENG) 108.

The power control unit 101 is connected to the power transmission control unit 102, the power transmission control unit 102 is connected to the overdrive clutch 103, the overdrive clutch 103 is connected to the engine 108 and the generator 107 respectively, the generator 107 is connected to the battery 104 via the power distribution unit 105 , and the battery 104 is connected to the motor 106.

The overdrive clutch 103 is disengaged when a hybrid vehicle is driven in a pure electric mode. This pure electric mode is suitable for scenarios with sufficient battery power as well as open scenarios, such as vehicle starting and a city road condition.

FIG. 2A is a schematic structural diagram of a series mode of a hybrid vehicle. As shown in FIG. 2A, when the hybrid vehicle is driven in the series mode, an overdrive clutch 103 is disengaged. An engine 108 drives a generator 107 to generate electricity. The generator 107 provides power to a motor 106 after a conversion by a power distribution unit 105 and a battery 104, and then the motor 106 drives the vehicle. This series mode is suitable for situations where battery power is insufficient or a vehicle load varies greatly.

It needs to be noted that the engine 108 supplies power to the motor 106 via the generator 107, and electrical energy is converted to mechanical energy. When a driving demand becomes small, the engine 108 charges the battery 104 with excess energy. When the driving demand becomes large, the battery 104 discharges to provide the electrical energy to the motor 106 together with the generator 107.

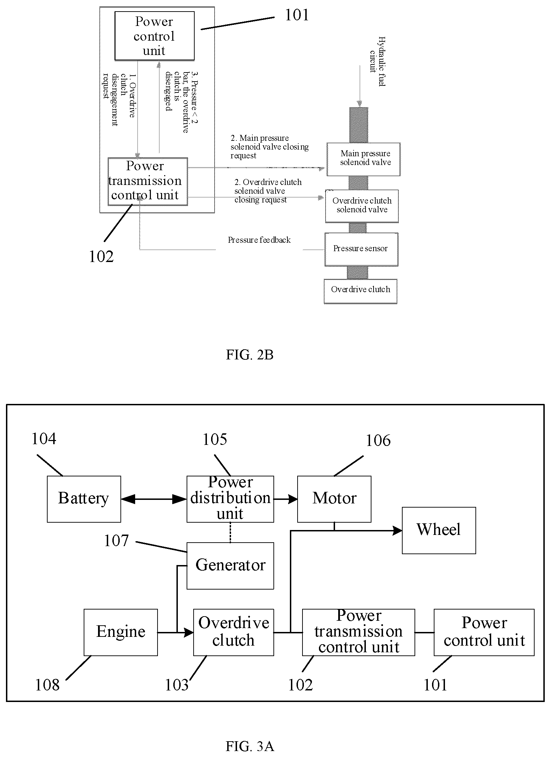

As shown in FIG. 2B, a power control unit 101 sends an overdrive clutch disengagement request to a power transmission control unit 102, the power transmission control unit 102, after receiving the overdrive clutch disengagement request, sends a main pressure solenoid valve closing request and an overdrive clutch solenoid valve closing request to the overdrive clutch 103, and thus the overdrive clutch 103 is controlled to be disengaged, achieving an effect of switching to the series mode.

FIG. 3A is a schematic structural diagram of a parallel mode of a hybrid vehicle. As shown in FIG. 3A, when the hybrid vehicle is driven in the parallel mode, an overdrive clutch 103 is closed, and an engine 108 drives the vehicle directly. When a driving demand becomes small, the engine 108 charges a battery 104 with excess energy. When the driving demand becomes large, the battery 104 discharges electricity to a motor 106, and the motor 106 drives the vehicle together with the engine 108. This parallel mode is suitable for situations where battery power is insufficient or a vehicle load varies little at a high vehicle speed.

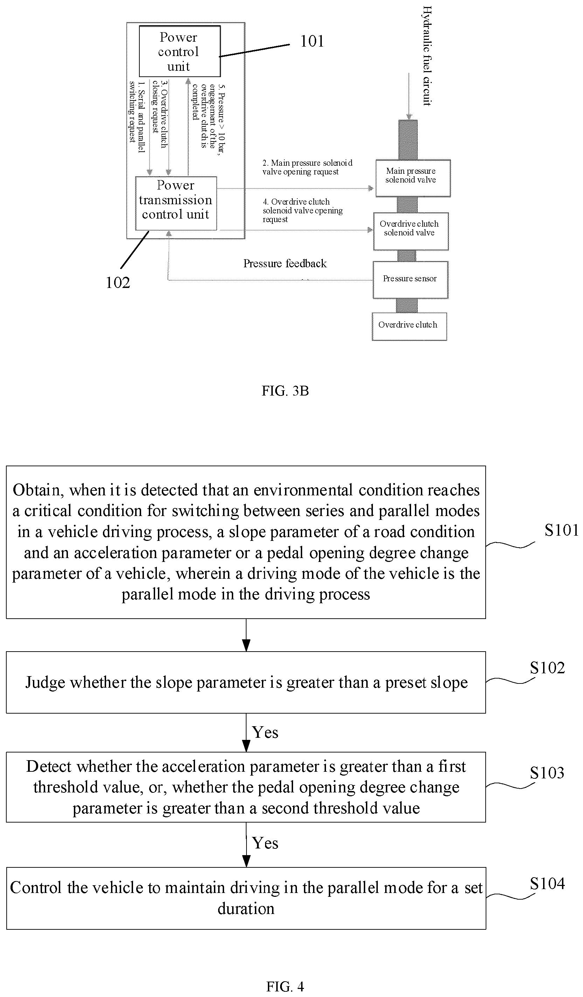

As shown in FIG. 3B, a power control unit 101 first sends a serial and parallel switching request to a power transmission control unit 102. Then the power transmission control unit 102 sends a main pressure solenoid valve opening request to an overdrive clutch 103 after receiving the serial and parallel switching request. Next, the power control unit 101 sends an overdrive clutch closing request to the power transmission control unit 102. The power transmission control unit 102, after receiving the overdrive clutch closing request, sends an overdrive clutch solenoid opening request to the overdrive clutch 103 to control the overdrive clutch 103 to be closed, achieving an effect of switching to a parallel mode.

A specific operating principle and working process of the power control unit 101 may be found in relevant description of a method embodiment below, which will not be repeated here.

According to an embodiment of the present disclosure, an embodiment of a control method for a hybrid mode is provided. It needs to be noted that steps illustrated in a flowchart of an accompanying drawing may be executed in, for example, a computer system with a set of computer-executable instructions. Moreover, although a logical order is illustrated in the flowchart, in some cases, the steps illustrated or described may be executed in an order different from the order here.

A control method for a hybrid mode is provided in the present embodiment, which may be used for the power control unit, such as an MCU and a single chip microcomputer, in the control system for the hybrid mode as shown in FIG. 1.

FIG. 4 is a flowchart of the control method for the hybrid mode provided by the embodiment of the present application. As shown in FIG. 4, the flow includes the following steps.

Step S101, when it is detected that an environmental condition reaches a critical condition for switching between series and parallel modes in a vehicle driving process, a slope parameter of a road condition and an acceleration parameter or a pedal opening degree change parameter of a vehicle are obtained. A driving mode of the vehicle is the parallel mode in the driving process.

Specifically, before the vehicle is driven in the parallel mode, it needs to undergo two steps of judgments. First whether the vehicle has an economical efficiency parallel request is judged. Then whether a preset condition for switching to the parallel mode is met is judged.

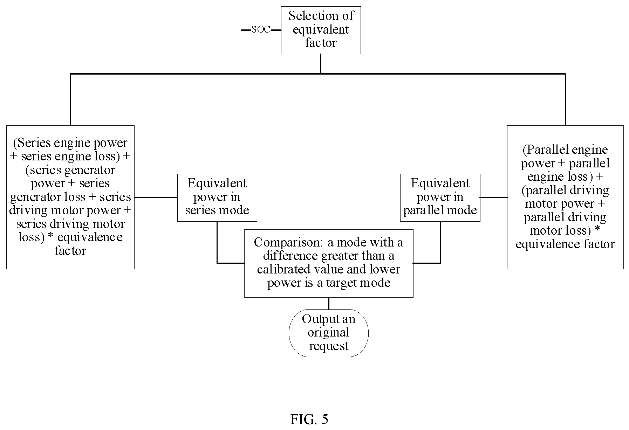

In some optional implementations, when whether the vehicle has the economical efficiency parallel request is judged, it is ensured that an engine of the vehicle is in a most energy-efficient target state at all times via a transient equivalent consumption minimization strategy (ECMS) based on a current torque distribution policy. As shown in FIG. 5, the ECMS will establish an equivalent relationship between fuel required for electrical energy consumed by the vehicle and fuel required for compensating the electrical energy. Fuel consumption and power consumption of the engine at a certain instant are attributed to a unified energy consumption index, transient equivalent energy consumption minimization is taken as a control target, instantaneous equivalent energy consumption in the series mode and instantaneous equivalent energy consumption in the parallel mode are calculated respectively, the two are compared to each other, and the smaller one is an economical efficiency target driving mode. When equivalent minimum energy consumption of the parallel mode is less than equivalent minimum energy consumption of the series mode, an economical efficiency parallel target mode is output, and an economical efficiency parallel request is generated. When the equivalent minimum energy consumption of the series mode is less than the equivalent minimum energy consumption of the parallel mode, an economical efficiency serial target mode is output, and an economical efficiency serial request is generated. It needs to be noted that a calculation manner of the equivalent minimum energy consumption of the parallel mode is as follows:

equivalent minimum energy consumption of parallel mode = (parallel engine power + parallel engine loss) + (parallel driving motor power + parallel driving motor loss) * equivalent factor;

where generator power and generator loss in the parallel mode = 0.

In addition, a calculation manner of the equivalent minimum energy consumption of the series mode is as follows:

equivalent minimum energy consumption of series mode = (series engine power + series engine loss) + (series generator power + series generator loss + series driving motor power + series driving motor loss) * equivalent factor.

Thus, whether there is the economical efficiency parallel request is judged by calculating the equivalent minimum energy consumption of the parallel mode and the equivalent minimum energy consumption of the series mode, and comparing the two.

In some optional implementations, the driving mode of the vehicle is controlled to be the parallel mode in a case where a preset condition is met in the vehicle driving process. When whether the preset condition for switching to the parallel mode is met is judged, the preset condition includes one or more of the following: a vehicle speed of the vehicle is greater than a vehicle speed threshold value; a gear of the vehicle is a drive gear; a battery SOC percentage on the vehicle is higher than a power threshold value; the driving mode of the vehicle is a pure electric driving mode; an overdrive clutch on the vehicle does not fail; or an engine on the vehicle is in an ignition state, and a fuel level of the vehicle is higher than a fuel level threshold value.

It needs to be noted that a state of charge (SOC) of a battery is the state of charge of the battery, i.e., a ratio between a current quantity of charge stored in the battery to its maximum capacity. The SOC is expressed in a form of percentage between 0% (completely empty) and 100% (completely fully charged). The SOC of the battery is a concept commonly used in electric vehicles and hybrid vehicles and is used to indicate a charge level of the battery. A current SOC value may be obtained by monitoring and calculating a current and voltage in the battery.

Thus, the driving mode of the vehicle is controlled to be the parallel mode in the case where the preset condition is met, achieving an economical efficiency parallel effect.

Specifically, the environmental condition includes an altitude of an environment where the vehicle is located. When it is detected that an altitude of the vehicle exceeds an altitude threshold value, it is detected that the environmental condition reaches the critical condition for switching between the series and parallel modes. Exemplarily, when in a high-altitude area, since a high altitude affects an external characteristic torque of the engine, and power preservation in the high altitude area is extremely difficult, when the altitude is higher than the altitude threshold value, series and parallel mode switching is triggered, and the vehicle is about to turn off a parallel mode maintaining function and run in the series mode. When in a low-altitude area, i.e., when the altitude is lower than the altitude threshold value, the parallel mode is maintained.

Thus, whether the environmental condition reaches the critical condition for switching between the series and parallel modes is detected by judging whether the altitude of the vehicle exceeds the altitude threshold value.

Specifically, the environmental condition includes a first temperature of the environment where the vehicle is located. When it is detected that the first temperature of the environment where the vehicle is located exceeds a first preset temperature interval, it is detected that the environmental condition reaches the critical condition for switching between the series and parallel modes. Exemplarily, when the first temperature of the environment where the vehicle is located is a normal temperature, i.e., when an environmental temperature is in the first preset temperature interval, the parallel mode is maintained. When the first temperature of the environment where the vehicle is located is extremely high or extremely low, i.e., when the environmental temperature exceeds the first preset temperature interval, due to characteristics of the battery, discharging power has a large attenuation compared to that at the normal temperature. At this time, series and parallel mode switching is triggered, and the vehicle is about to turn off the parallel mode maintaining function and run in the series mode.

Thus, whether the environmental condition reaches the critical condition for switching between the series and parallel modes is detected by judging whether the first temperature of the environment where the vehicle is located exceeds the first preset temperature interval.

Specifically, the environmental condition includes a battery charge parameter SOC on the vehicle. When it is detected that the battery SOC percentage is lower than a power threshold value, it is detected that the environmental condition reaches the critical condition for switching between the series and parallel modes. Exemplarily, when the battery SOC percentage is extremely low, power preservation is a first need of the entire vehicle at this time, so when the SOC percentage is lower than the power threshold value, series and parallel mode switching is triggered, and the vehicle is about to turn off the parallel mode maintaining function and run in the series mode. The parallel mode is maintained when the battery SOC percentage increases, i.e., when the battery SOC percentage is higher than the power threshold value.

Thus, whether the environmental condition reaches the critical condition for switching between the series and parallel modes is detected by judging whether the battery SOC percentage is lower than the power threshold value.

Specifically, the environmental condition includes a second temperature of the battery on the vehicle. When it is detected that the second temperature of the battery exceeds a second preset temperature interval, it is detected that the environmental condition reaches the critical condition for switching between the series and parallel modes. Exemplarily, when the temperature of the battery is extremely low or extremely high , i.e., due to characteristics of the battery, discharging power has a large attenuation compared to that at the normal temperature. Thus when the second temperature of the battery exceeds a second preset temperature interval, series and parallel mode switching is triggered, and the vehicle is about to turn off the parallel mode maintaining function and run in the series mode.

Thus, whether the environmental condition reaches the critical condition for switching between the series and parallel modes is detected by judging whether the second temperature of the battery exceeds the second preset temperature interval.

It needs to be noted that when the environmental conditions of the vehicle are detected in the driving process of the vehicle in the parallel mode, if it is detected that the altitude of the vehicle does not exceed the altitude threshold value, the first temperature of the environment where the vehicle is located does not exceed the first preset temperature interval, the battery SOC percentage is not lower than the power threshold, and the second temperature of the battery does not exceed the second preset temperature interval, it means that the environmental conditions do not reach the critical conditions for switching between the series and parallel modes, and the vehicle is controlled to continue to be driven in the parallel mode.

Step S102, whether the slope parameter is greater than a preset slope is judged.

Specifically, if a result of the judgment of step S102 is yes, step S103 is executed.

Exemplarily, the preset slope may be 5°, or a set slope range of, for example, 5-10°, and the present application is not limited thereto.

Step S103, whether the acceleration parameter is greater than a first threshold value, or, whether the pedal opening degree change parameter is greater than a second threshold value is detected.

In some optional implementations, the acceleration parameter $a_v$ is calculated based on the vehicle speed, time, and a following formula:

$$a_v = (v2 - v1)/(t2 - t1)$$

where v2 denotes a speed at a moment t2, and v1 denotes a speed at a moment t1.

In some optional implementations, the pedal opening degree change parameter $a_p$ is calculated based on a pedal opening degree, time, and a following formula:

$$a_p = (p2 - p1)/(t2 - t1)$$

where p2 denotes a pedal opening degree at the moment t2, and p1 denotes a pedal opening degree at a moment t1.

Specifically, whether the vehicle triggers a transient operating condition is judged by detecting whether the acceleration parameter is greater than the first threshold value, or, whether the pedal opening degree change parameter is greater than the second threshold value. If the slope parameter is greater than the preset slope, and the acceleration parameter is greater than the first threshold value, it is judged that the transient operating condition is triggered. Or, if the slope parameter is greater than the preset slope, and the pedal opening degree change parameter is greater than the second threshold value, it is similarly judged that the transient operating condition is triggered.

Specifically, if judgment results in the two judgments in step S103 are both no, the series mode or the parallel mode is freely switched according to an economical efficiency or power request.

Specifically, if the result of any of the two judgments in step S 103 is yes, step S 104 is executed.

Step S104, the vehicle is controlled to maintain driving in the parallel mode for a set duration.

Specifically, after it is determined that the vehicle triggers the transient operating condition, the vehicle is not immediately switched to the series mode. Instead, the vehicle is controlled to maintain the parallel mode for the set duration to continue driving, thus circumventing a problem of an increase in rotational speed during switching from the parallel to the series, thereby avoiding generating a noise when the engine runs, preventing bad experience for a user. It needs to be noted that the set duration may be set according to a specific model of the vehicle as well as an actual scenario.

According to the control method for the hybrid mode provided in the embodiment of the present application, when it is detected that the environmental condition reaches the critical condition for switching between the series and parallel modes in the vehicle driving process, the slope parameter of the road condition and the acceleration parameter or the pedal opening degree change parameter of the vehicle are obtained. Next, whether the slope parameter is greater than the preset slope is judged. If yes, whether the acceleration parameter is greater than the first threshold value, or, whether the pedal opening degree change parameter is greater than the second threshold value is detected, so that whether the vehicle triggers the transient operating condition is judged from a plurality of dimensions. If the result of any of the two judgments is yes, the vehicle is controlled to maintain driving in the parallel mode for the set duration. Thus, the vehicle is not immediately switched to the series mode. Instead, the vehicle is controlled to maintain the parallel mode for the set duration to continue driving, which may circumvent the problem of an increase in rotational speed during switching from the parallel to the series, thus avoiding generating the noise when the engine runs. The method improves the experience of the user.

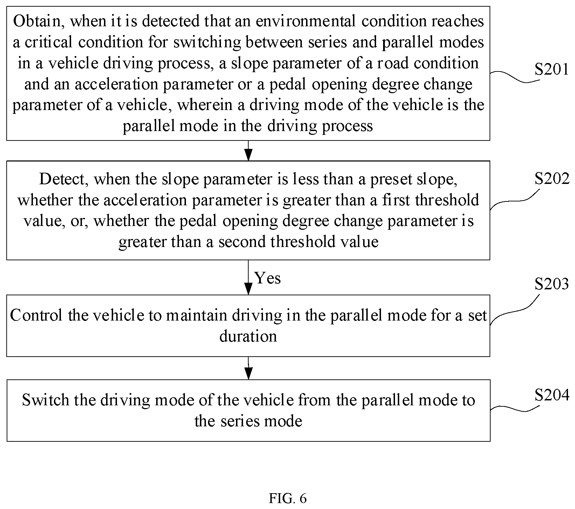

A control method for a hybrid mode is provided in the present embodiment, which may be used for the power control unit, such as a micro controller unit (MCU) and a single chip microcomputer, in the control system for the hybrid mode as shown in FIG. 1. FIG. 6 is a flowchart of the control method for the hybrid mode provided by the embodiment of the present application. As shown in FIG. 6, the flow includes the following steps.

Step S201, when it is detected that an environmental condition reaches a critical condition for switching between series and parallel modes in a vehicle driving process, a slope parameter of a road condition and an acceleration parameter or a pedal opening degree change parameter of a vehicle are obtained. A driving mode of the vehicle is the parallel mode in the driving process. Refer to the description related to step S101 shown in FIG. 4 for details, which will not be repeated here.

Step S202, when the slope parameter is less than the preset slope, whether the acceleration parameter is greater than a first threshold value, or, whether the pedal opening degree change parameter is greater than a second threshold value is detected.

Specifically, whether the vehicle triggers a transient operating condition is judged by detecting whether the acceleration parameter is greater than the first threshold value, or, whether the pedal opening degree change parameter is greater than the second threshold value. If the slope parameter is less than the preset slope, and the acceleration parameter is greater than the first threshold value, it is judged that the transient operating condition is triggered. Or, if the slope parameter is less than the preset slope, and the pedal opening degree change parameter is greater than the second threshold value, it is similarly judged that the transient operating condition is triggered.

Specifically, a calculation process of the acceleration parameter and the pedal opening degree change parameter may refer to the description related to step S103 shown in FIG. 4, which will not be repeated here.

Specifically, if a result of any of the two judgments in step S202 is yes, step S203 is executed.

Step S203, the vehicle is controlled to maintain driving in the parallel mode for a set duration. Refer to the description related to step S104 shown in FIG. 4 for details, which will not be repeated here.

Specifically, step S204 is executed after step S203 is executed, i.e., after the set duration ends.

Step S204, the driving mode of the vehicle is switched from the parallel mode to the series mode.

Specifically, after the set duration ends, the driving mode of the vehicle is switched from the parallel mode to the series mode. In this way, after series and parallel switching is triggered, the vehicle is first controlled to maintain the parallel mode for the set duration to continue driving, and then switched to the series mode, thus circumventing a problem of an increase in rotational speed during switching from the parallel to the series, avoiding generating a noise when the engine runs, preventing bad experience for the user.

According to the control method for the hybrid mode provided in the embodiment of the present application, when it is detected that the environmental condition reaches the critical condition for switching between the series and parallel modes in the vehicle driving process, the slope parameter of the road condition and the acceleration parameter or the pedal opening degree change parameter of the vehicle are obtained. When the slope parameter is less than the preset slope, whether the acceleration parameter is greater than the first threshold value, or, whether the pedal opening degree change parameter is greater than the second threshold value is detected, so that whether the vehicle triggers series and parallel switching is judged from a plurality of dimensions. If the result of any of the two judgments is yes, the vehicle is controlled to maintain driving in the parallel mode for the set duration. In this way, the vehicle is first controlled to maintain the parallel mode for the set duration to continue driving, and then switched to the series mode, which may circumvent a problem of an increase in rotational speed during switching from the parallel to the series, thus avoiding generating a noise when the engine runs, preventing the bad experience for the user.

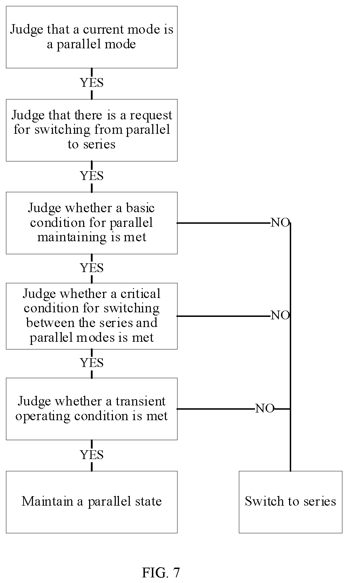

The control method for the hybrid mode of the embodiment of the present application is described in detail below in conjunction with a specific application example. As shown in FIG. 7, the specific application example includes the following steps.

Step 1, whether a current mode of the vehicle is a parallel mode is judged. Whether the vehicle has an economical efficiency parallel request is first judged. Whether a preset condition for switching to the parallel mode is met is then judged. The preset condition includes one or more of the following: a vehicle speed of the vehicle is greater than a vehicle speed threshold value; a gear of the vehicle is a drive gear; a battery SOC percentage on the vehicle is higher than a power threshold value; the driving mode of the vehicle is a pure electric driving mode; an overdrive clutch on the vehicle does not fail; or an engine on the vehicle is in an ignition state, and a fuel level of the vehicle is higher than a fuel level threshold value.

Step 2, it is judged that there is a request for switching from parallel to series: whether a basic condition for parallel maintaining is met is first judged, then whether the critical condition for switching between series and parallel modes is met is then judged, and whether the transient operating condition is met is finally judged.

When whether the basic condition for parallel maintaining is met is first judged, whether the vehicle has the economical efficiency parallel request is first judged. Whether the preset condition for switching to the parallel mode is met is then judged. The preset condition includes one or more of the following: a vehicle speed of the vehicle is greater than a vehicle speed threshold value; a gear of the vehicle is a drive gear; a battery SOC percentage on the vehicle is higher than a power threshold value; the driving mode of the vehicle is a pure electric driving mode; an overdrive clutch on the vehicle does not fail; or an engine on the vehicle is in an ignition state, and a fuel level of the vehicle is higher than a fuel level threshold value.

When whether the critical condition for switching between the series and parallel modes is met is judged, if it is detected that the altitude of the vehicle exceeds the altitude threshold value, or the first temperature of the environment where the vehicle is located exceeds the first preset temperature interval, or the battery SOC percentage is lower than the power threshold, or the second temperature of the battery exceeds the second preset temperature interval, it is detected that the environmental condition reaches the critical conditions for switching between the series and parallel modes.

When whether the transient operating condition is met is judged, whether the slope parameter is greater (less) than the preset slope is first judged. If yes, whether the acceleration parameter is greater than the first threshold value, or, whether the pedal opening degree change parameter is greater than the second threshold value is detected. If a result of any of the two judgments is yes, it is judged that the transient operating condition is met.

A control apparatus for a hybrid mode is further provided in the present embodiment, which is configured to achieve the above embodiments and preferred implementations, which will not be repeated where descriptions have already been made. As used below, a term "module" may be a combination of software and/or hardware that implements a predetermined function. Although the apparatus described in the following embodiment is preferably implemented in software, an implementation in hardware, or a combination of software and hardware, is also possible and contemplated.

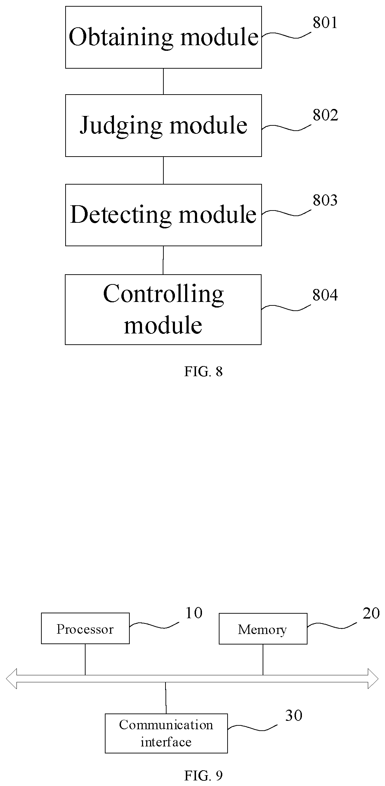

The present embodiment provides a control apparatus for a hybrid mode, as shown in FIG. 8, including:

an obtaining module, configured to obtain, when it is detected that an environmental condition reaches a critical condition for switching between series and parallel modes in a vehicle driving process, a slope parameter of a road condition and an acceleration parameter or a pedal opening degree change parameter of a vehicle, wherein a driving mode of the vehicle is the parallel mode in the driving process;

a judging module, configured to judge whether the slope parameter is greater than a preset slope;

a detecting module, configured to detect, when a judgment of a second processing module is yes, whether the acceleration parameter is greater than a first threshold value, or, whether the pedal opening degree change parameter is greater than a second threshold value; and

a controlling module, configured to control, when a result of any of two judgments of a third processing module is yes, the vehicle to maintain driving in the parallel mode for a set duration.

In an optional implementation, the judging module is further configured to judge whether the slope parameter is less than the preset slope.

The detecting module is further configured to detect, when a judgment of the judging module is yes, whether the acceleration parameter is greater than the first threshold value, or, whether the pedal opening degree change parameter is greater than the second threshold value.

The controlling module is further configured to control, when the detecting module detects that a result of any of two judgments is yes, the vehicle to maintain driving in the parallel mode for a set duration.

In an optional implementation, the environmental condition includes an altitude of an environment where the vehicle is located. Detecting that the environmental condition reaches the critical condition for switching between the series and parallel modes includes: detecting that an altitude of the vehicle exceeds an altitude threshold value.

In an optional implementation, the environmental condition includes a first temperature of the environment where the vehicle is located. Detecting that the environmental condition reaches the critical condition for switching between the series and parallel modes includes: detecting that the first temperature of the environment where the vehicle is located exceeds a first preset temperature interval.

In an optional implementation, the environmental condition includes a battery charge parameter SOC on the vehicle. Detecting that the environmental condition reaches the critical condition for switching between the series and parallel modes includes: detecting that a battery SOC percentage is lower than a power threshold value.

In an optional implementation, the environmental condition includes a second temperature of a battery on the vehicle.

Detecting that the environmental condition reaches the critical condition for switching between the series and parallel modes includes: detecting that the second temperature of the battery exceeds a second preset temperature interval.

In an optional implementation, the controlling module is further configured to switch, after controlling the vehicle to maintain driving in the parallel mode for the set duration, the driving mode of the vehicle from the parallel mode to the series mode.

In an optional implementation, the controlling module is further configured to control the driving mode of the vehicle to be the parallel mode in a case where a preset condition is met in the vehicle driving process.

The preset condition includes one or more of the following:

a vehicle speed of the vehicle is greater than a vehicle speed threshold value;

a gear of the vehicle is a drive gear;

the battery SOC percentage on the vehicle is higher than the power threshold value;

the driving mode of the vehicle is a pure electric driving mode;

an overdrive clutch on the vehicle does not fail; or

an engine on the vehicle is in an ignition state, and a fuel level of the vehicle is higher than a fuel level threshold value.

The control apparatus for the hybrid mode in the present embodiment is presented in a form of a functional unit, and the unit here refers to an ASIC, a processor and memory executing one or more pieces of software or fixed programs, and/or other devices that may provide the above functions.

Further functional descriptions of each of the above modules and units are the same as the corresponding embodiments above, which will not be repeated here.

An embodiment of the present disclosure further provides a power control unit having the control apparatus for the hybrid mode as shown in FIG. 8 above.

Please refer to FIG. 9, which is a schematic structural diagram of a power control unit provided by an optional embodiment of the present application. As shown in FIG. 9, the power control unit includes: one or more processors 10, a memory 20, and interfaces for connecting various components, including a high-speed interface and a low-speed interface. The various components are in a communication connection with each other using different buses and may be mounted on a common motherboard or mounted in other modes as required. The processor may process instructions executed within the power control unit, including instructions stored in or on the memory to display graphical information of a GUI on an external input/output apparatus (e.g., a display device coupled to the interface).

In some optional implementations, a plurality of processors and/or a plurality of buses may be used together with a plurality of memories if desired. Similarly, a plurality of devices may be connected, with the individual devices providing part of a necessary operation (e.g., as a server array, a group of blade servers, or a multiprocessor system). A processor 10 is shown as an example in FIG. 9.

The processor 10 may be a central processor, a network processor or a combination thereof. The processor 10 may further include a hardware chip. The above hardware chip may be a specialized integrated circuit, a programmable logic device or a combination thereof. The above programmable logic device may be a complex programmable logic device, a field programmable logic gate array, a general purpose array logic, or any combination thereof.

The memory 20 stores instructions executable by the at least one processor 10 to cause the at least one processor 10 to execute and implement the method illustrated in the above embodiment.

The memory 20 may include a program storage area and a data storage area, wherein the program storage area may store an operating system, and an application program required by at least one function, and the data storage area may store data created according to the use of the power control unit, etc. In addition, the memory 20 may include a high-speed random access memory, and may further include a non-transient memory, such as at least one disk memory device, a flash memory device, or other non-transient solid state memory device. In some optional implementations, the memory 20 optionally includes memories remotely arranged relative to the processor 10, and these remote memories may be connected to this power control unit via a network. Examples of the above network include, but are not limited to, the Internet, corporate intranets, local area networks, mobile communication networks, and combinations thereof.

The memory 20 may include a volatile memory, e.g., a random access memory. The memory may also include a non-volatile memory, e.g., a flash memory, a hard disk, or a solid state disk. The memory 20 may also include a combination of the above types of memories.

The power control unit further includes a communication interface 30 for the power control unit to communicate with other devices or communication networks.

An embodiment of the present application further provides a computer-readable storage medium. The above method according to the embodiments of the present application may be implemented in hardware and firmware, or implemented as being recorded on a storage medium, or implemented as a computer code originally stored in a remote storage medium or non-transitory machine-readable storage medium downloaded over a network and to be stored in a local storage medium, such that the method described herein may be processed by such software stored on a storage medium using a general-purpose computer, a dedicated processor, or programmable or dedicated hardware.

The storage medium may be a disk, an optical disk, a read-only storage memory, a random storage memory, a flash memory, a hard disk or a solid state disk, etc. Optionally, the storage medium may further include a combination of the above types of memories. It may be understood that a computer, processor, microprocessor controller, or programmable hardware includes a storage component that may store or receive software or a computer code. When the software or computer code is accessed and executed by the computer, processor, or hardware, the method illustrated in the above embodiments is implemented.

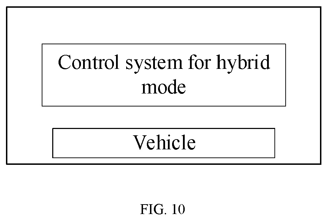

In addition, the present embodiment further provides a vehicle. As shown in FIG. 10, the vehicle includes the control system for the hybrid mode as shown in FIG. 1.

Although the embodiments of the present application are described in conjunction with the accompanying drawings, various modifications and variations may be made by those of skill in the art without departing from the spirit and scope of the present application, and such modifications and variations fall within the scope defined by the appended claims.

**Claims**

1. A control method for a hybrid mode, **characterized by** comprising:

   obtaining, when it is detected that an environmental condition reaches a critical condition for switching between series and parallel modes in a vehicle driving process, a slope parameter of a road condition and an acceleration parameter or a pedal opening degree change parameter of a vehicle, wherein a driving mode of the vehicle is a parallel mode in the driving process;
   judging whether the slope parameter is greater than a preset slope;
   detecting, if yes, whether the acceleration parameter is greater than a first threshold value, or, whether the pedal opening degree change parameter is greater than a second threshold value; and
   controlling, if a result of any of two judgments is yes, the vehicle to maintain driving in the parallel mode for a set duration.

2. The method according to claim 1, **characterized by** further comprising:

   detecting, when the slope parameter is less than the preset slope, whether the acceleration parameter is greater than the first threshold value, or, whether the pedal opening degree change parameter is greater than the second threshold value; and
   controlling, if a result of any of two judgments is yes, the vehicle to maintain driving in the parallel mode for a set duration.

3. The method according to claim 1, **characterized in that**, the environmental condition comprises an altitude of an environment where the vehicle is located; and

detecting that the environmental condition reaches the critical condition for switching between the series and parallel modes comprises:

detecting that an altitude of the vehicle exceeds an altitude threshold value.

4. The method according to claim 1, **characterized in that**, the environmental condition comprises a first temperature of an environment where the vehicle is located; and

detecting that the environmental condition reaches the critical condition for switching between the series and parallel modes comprises:

detecting that the first temperature of the environment where the vehicle is located exceeds a first preset temperature interval.

5. The method according to claim 1, **characterized in that**, the environmental condition comprises a battery charge parameter SOC on the vehicle; and

detecting that the environmental condition reaches the critical condition for switching between the series and parallel modes comprises:

detecting that a battery SOC percentage is lower than a power threshold value.

6. The method according to claim 1, **characterized in that**, the environmental condition comprises a second temperature of a battery on the vehicle; and

detecting that the environmental condition reaches the critical condition for switching between the series and parallel modes comprises:

detecting that the second temperature of the battery exceeds a second preset temperature interval.

7. The method according to any one of claims 1 to 6, **characterized in that**, after controlling the vehicle to maintain driving in the parallel mode for the set duration, the method further comprises:

switching the driving mode of the vehicle from the parallel mode to the series mode.

8. The method according to claim 1 or 2, **characterized in that**, the driving mode of the vehicle is controlled to be the parallel mode in a case where a preset condition is met in the vehicle driving process, and

the preset condition comprises one or more of the following:

a vehicle speed of the vehicle is greater than a vehicle speed threshold value;
a gear of the vehicle is a drive gear;
a battery SOC percentage on the vehicle is higher than a power threshold value;
the driving mode of the vehicle is a pure electric driving mode;
an overdrive clutch on the vehicle does not fail; or
an engine on the vehicle is in an ignition state, and a fuel level of the vehicle is higher than a fuel level threshold value.

9. A control apparatus for a hybrid mode, **characterized by** comprising:

an obtaining module, configured to obtain, when it is detected that an environmental condition reaches a critical condition for switching between series and parallel modes in a vehicle driving process, a slope parameter of a road condition and an acceleration parameter or a pedal opening degree change parameter of a vehicle, wherein a driving mode of the vehicle is a parallel mode in the driving process;
a judging module, configured to judge whether the slope parameter is greater than a preset slope;
a detecting module, configured to detect, when a judgment of a second processing module is yes, whether the acceleration parameter is greater than a first threshold value, or, whether the pedal opening degree change parameter is greater than a second threshold value; and
a controlling module, configured to control, when a result of any of two judgments of a third processing module is yes, the vehicle to maintain driving in the parallel mode for a set duration.

10. The apparatus according to claim 9, **characterized in that**,

the judging module is further configured to judge whether the slope parameter is less than the preset slope;
the detecting module is further configured to detect, when a judgment of the judging module is yes, whether the acceleration parameter is greater than a first threshold value, or, whether the pedal opening degree change parameter is greater than a second threshold value; and

the controlling module is further configured to control, when the detecting module detects that a result of any of two judgments is yes, the vehicle to maintain driving in the parallel mode for a set duration.

11. The apparatus according to claim 9, **characterized in that**, the environmental condition comprises an altitude of an environment where the vehicle is located; and

detecting that the environmental condition reaches the critical condition for switching between the series and parallel modes comprises:

detecting that an altitude of the vehicle exceeds an altitude threshold value.

12. The apparatus according to claim 9, **characterized in that**, the environmental condition comprises a first temperature of an environment where the vehicle is located; and

detecting that the environmental condition reaches the critical condition for switching between the series and parallel modes comprises:

detecting that the first temperature of the environment where the vehicle is located exceeds a first preset temperature interval.

13. The apparatus according to claim 9, **characterized in that**, the environmental condition comprises a battery charge parameter SOC on the vehicle; and

detecting that the environmental condition reaches the critical condition for switching between the series and parallel modes comprises:

detecting that a battery SOC percentage is lower than a power threshold value.

14. The apparatus according to claim 9, **characterized in that**, the environmental condition comprises a second temperature of a battery on the vehicle; and

detecting that the environmental condition reaches the critical condition for switching between the series and parallel modes comprises:

detecting that the second temperature of the battery exceeds a second preset temperature interval.

15. The apparatus according to any one of claims 9 to 14, **characterized in that**,

the controlling module is further configured to switch, after controlling the vehicle to maintain driving in the parallel mode for the set duration, the driving mode of the vehicle from the parallel mode to the series mode.

16. The apparatus according to claim 9 or 10, **characterized in that**,

the controlling module is further configured to control the driving mode of the vehicle to be the parallel mode in a case where a preset condition is met in the vehicle driving process, and

the preset condition comprises one or more of the following:

a vehicle speed of the vehicle is greater than a vehicle speed threshold value;

a gear of the vehicle is a drive gear;

a battery SOC percentage on the vehicle is higher than a power threshold value;

the driving mode of the vehicle is a pure electric driving mode;

an overdrive clutch on the vehicle does not fail; or

an engine on the vehicle is in an ignition state, and a fuel level of the vehicle is higher than a fuel level threshold value.

17. A power control unit, **characterized by** comprising a memory and a processor, wherein the memory and the processor are connected;

the memory stores computer instructions therein; and

the processor executes the control method for the hybrid mode according to any one of claims 1 to 8 by executing the computer instructions.

18. A computer-readable storage medium, **characterized by** storing computer instructions thereon, wherein the computer instructions are configured to cause a computer to execute the control method for the hybrid mode according to any one of claims 1 to 8.

19. A control system for a hybrid mode, **characterized by** comprising a power control unit, a power transmission control unit, an overdrive clutch, a battery, a power distribution unit, a motor, a generator, and an engine;

   wherein the power control unit is connected to the power transmission control unit, the power transmission control unit is connected to the overdrive clutch, the overdrive clutch is connected to the engine and the generator respectively, the generator is connected to the battery via the power distribution unit, and the battery is connected to the motor; and
   the power control unit is configured to perform the control method for the hybrid mode according to any one of claims 1 to 8.

20. A vehicle, **characterized by** comprising the control system for the hybrid mode according to claim 19.

104       105      106

Battery  Power distribution unit  Motor

Wheel

107  Generator

Engine  Overdrive clutch  Power transmission control unit  Power control unit

108    103    102    101

FIG. 1

104       105      106

Battery  Power distribution unit  Motor

Wheel

107  Generator

Engine  Overdrive clutch  Power transmission control unit  Power control unit

108    103    102    101

FIG. 2A

Power control unit 101

Hydraulic fuel circuit

1. Overdrive clutch disengagement request

3. Pressure < 2 bar the overdrive clutch is disengaged

Power transmission control unit

102

2. Main pressure solenoid valve closing request

Main pressure solenoid valve

2. Overdrive clutch solenoid valve closing request

Overdrive clutch solenoid valve

Pressure feedback

Pressure sensor

Overdrive clutch

FIG. 2B

104    105    106

Battery → Power distribution unit → Motor

Wheel

107    Generator

Engine → Overdrive clutch → Power transmission control unit → Power control unit

108    103    102    101

FIG. 3A

FIG. 3B

Obtain, when it is detected that an environmental condition reaches a critical condition for switching between series and parallel modes in a vehicle driving process, a slope parameter of a road condition and an acceleration parameter or a pedal opening degree change parameter of a vehicle, wherein a driving mode of the vehicle is the parallel mode in the driving process — S101

Judge whether the slope parameter is greater than a preset slope — S102

Yes

Detect whether the acceleration parameter is greater than a first threshold value, or, whether the pedal opening degree change parameter is greater than a second threshold value — S103

Yes

Control the vehicle to maintain driving in the parallel mode for a set duration — S104

FIG. 4

SOC — Selection of equivalent factor

(Series engine power + series engine loss) + (series generator power + series generator loss + series driving motor power + series driving motor loss) * equivalence factor

Equivalent power in series mode

Comparison: a mode with a difference greater than a calibrated value and lower power is a target mode

Equivalent power in parallel mode

(Parallel engine power + parallel engine loss) + (parallel driving motor power + parallel driving motor loss) * equivalence factor

Output an original request

FIG. 5

Obtain, when it is detected that an environmental condition reaches a critical condition for switching between series and parallel modes in a vehicle driving process, a slope parameter of a road condition and an acceleration parameter or a pedal opening degree change parameter of a vehicle, wherein a driving mode of the vehicle is the parallel mode in the driving process — S201

Detect, when the slope parameter is less than a preset slope, whether the acceleration parameter is greater than a first threshold value, or, whether the pedal opening degree change parameter is greater than a second threshold value — S202

Yes

Control the vehicle to maintain driving in the parallel mode for a set duration — S203

Switch the driving mode of the vehicle from the parallel mode to the series mode — S204

FIG. 6

Judge that a current mode is
a parallel mode

YES

Judge that there is a request
for switching from parallel
to series

YES

Judge whether a basic
condition for parallel
maintaining is met ————————————NO

YES

Judge whether a critical
condition for switching
between the series and
parallel modes is met ————————————NO

YES

Judge whether a transient
operating condition is met ————————————NO

YES

Maintain a parallel state

Switch to series

FIG. 7

Obtaining module ⌇ 801

Judging module ⌇ 802

Detecting module ⌇ 803

Controlling module ⌇ 804

FIG. 8

Processor ⌇ 10    Memory ⌇ 20

Communication interface ⌇ 30

FIG. 9

Control system for hybrid mode

Vehicle

FIG. 10

**EP 4 635 813 A1**

# INTERNATIONAL SEARCH REPORT

| International application No. |
|---|
| **PCT/CN2024/076101** |

### A. CLASSIFICATION OF SUBJECT MATTER

B60W20/20(2016.01)i; B60W40/076(2012.01)i; B60W40/10(2012.01)i

According to International Patent Classification (IPC) or to both national classification and IPC

### B. FIELDS SEARCHED

Minimum documentation searched (classification system followed by classification symbols)

IPC: B60W

Documentation searched other than minimum documentation to the extent that such documents are included in the fields searched

Electronic data base consulted during the international search (name of data base and, where practicable, search terms used)

CNABS, CNTXT, ENTXT, CNKI, DWPI: 串联, 并联, 混动, 混合动力, 坡度, 噪声, 噪音, 踏板, 开度, series, paralle, hybrid, power, slope, noise, pedal, degree

### C. DOCUMENTS CONSIDERED TO BE RELEVANT

| Category* | Citation of document, with indication, where appropriate, of the relevant passages | Relevant to claim No. |
|---|---|---|
| A | CN 114802194 A (CHINA FAW GROUP CORP., LTD.) 29 July 2022 (2022-07-29) claims 1, 6, and 7 | 1-20 |
| A | CN 115848349 A (SINOTRUK JI'NAN POWER CO., LTD.) 28 March 2023 (2023-03-28) entire document | 1-20 |
| A | CN 103879400 A (MITSUBISHI MOTORS CORP.) 25 June 2014 (2014-06-25) entire document | 1-20 |
| A | CN 104024073 A (MITSUBISHI MOTORS CORP.) 03 September 2014 (2014-09-03) entire document | 1-20 |
| A | US 2005256631 A1 (CAWTHORNE WILLIAM R et al.) 17 November 2005 (2005-11-17) entire document | 1-20 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 October 2024** | **21 October 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/076101**

| Patent document cited in search report | | | Publication date (day/month/year) | Patent family member(s) | | | Publication date (day/month/year) |
|---|---|---|---|---|---|---|---|
| CN | 114802194 | A | 29 July 2022 | None | | | |
| CN | 115848349 | A | 28 March 2023 | None | | | |
| CN | 103879400 | A | 25 June 2014 | JP | 2014121963 | A | 03 July 2014 |
| | | | | JP | 6119966 | B2 | 26 April 2017 |
| | | | | RU | 2013156618 | A | 27 June 2015 |
| | | | | RU | 2557645 | C2 | 27 July 2015 |
| | | | | US | 2014180515 | A1 | 26 June 2014 |
| | | | | US | 9061683 | B2 | 23 June 2015 |
| | | | | KR | 20140081696 | A | 01 July 2014 |
| | | | | KR | 101508445 | B1 | 07 April 2015 |
| | | | | EP | 2746082 | A1 | 25 June 2014 |
| | | | | EP | 2746082 | B1 | 16 December 2015 |
| CN | 104024073 | A | 03 September 2014 | US | 2014195092 | A1 | 10 July 2014 |
| | | | | US | 9346461 | B2 | 24 May 2016 |
| | | | | WO | 2013031491 | A1 | 07 March 2013 |
| | | | | EP | 2733034 | A1 | 21 May 2014 |
| | | | | EP | 2733034 | A4 | 14 June 2017 |
| | | | | EP | 2733034 | B1 | 14 November 2018 |
| | | | | KR | 20140033247 | A | 17 March 2014 |
| | | | | KR | 101529837 | B1 | 17 June 2015 |
| | | | | JP | 2013052710 | A | 21 March 2013 |
| | | | | JP | 5720893 | B2 | 20 May 2015 |
| US | 2005256631 | A1 | 17 November 2005 | DE | 102005022222 | A1 | 15 December 2005 |
| | | | | US | 7653474 | B2 | 26 January 2010 |

Form PCT/ISA/210 (patent family annex) (July 2022)